# EUROPEAN PATENT SPECIFICATION

(11) **EP 1 597 312 B1**
(45) Date of publication and mention of the grant of the patent: **30.03.2011**
(21) Application number: 04713768.2
(22) Date of filing: 23.02.2004
(51) Int. Cl.: B65D 65/46, C08J 5/18, C08L 29/04

(54) **WATER SOLUBLE FILM FOR TRIGGER SPRAY BOTTLE SOLUTION**
WASSERLÖSLICHER FILM FÜR EINE SPRÜHFLASCHENLÖSUNG
FILM SOLUBLE DANS L'EAU POUR SOLUTION EN FLACON PULVERISATEUR A GACHETTE

(30) Priority: 26.02.2003 US 375551
(43) Date of publication of application: 23.11.2005
(73) Proprietor: Monosol, LLC, Merrillville, IN 46410 (US)
(72) Inventor: VERRALL, Andrew, P., Crown Point, IN 46307 (US); KUGLER, Karen, A., Overland Park, Kansas 66210 (US)
(74) Representative: Johnson, Yvonne Catherine
(86) International application number: PCT/US2004/005308
(87) International publication number: WO 2004/076549

(56) References cited:
- EP-A- 0 291 198
- EP-A- 1 260 578
- GB-A- 2 090 603
- US-A- 4 206 101

## Description

### Field of the Invention

This invention relates to water-soluble film, more specifically, to water-soluble film which forms a substantially haze-free solution with water and a hard surface cleaner.

### Background

Cleaning hard surfaces, such as glass, is often accomplished through the use of a surface cleaner that is applied directly onto the surface, and then wiped off with a cloth, squeegee, or other means. These types of cleaners often include various combinations of anionic surfactants, nonionic surfactants, amphoteric surfactants, solvents, and chelating agents. Other ingredients often include ammonia, acetic acid, and water.

Because the surface cleaners are generally effective in solution with water, it is possible to have a concentrated cleaner that is mixed with water to form the cleaning solution. The concentrated cleaner may be packaged and shipped separately from the majority of the water component. The end user may then form the concentrate into the final cleaning solution by combining it with water. A problem with the use of concentrated cleaners is they benefit from precise mixing to ensure the proper concentration of surface cleaner in the final cleaning solution. Too dilute of a solution may result in poor performance by the cleaner. Too concentrated a solution may also result in poor performance in that it may leave a residue of the cleaning agent on the cleaned surface. In addition, too concentrated of a cleaning solution results in wasting a portion of the cleaning concentrate.

To prevent improper mixing of the cleaning concentrate, it has been found beneficial to package single use, pre-measured amounts of cleaning concentrate in individual packages. A pre-measured amount of cleaning concentrate is preferably added to a specific volume of water to form a properly concentrated cleaning solution. It is further possible to package the concentrate with a properly sized container such that the user simply adds the cleaning concentrate to the container and fills the remainder of the container with water. When the container is empty, a replacement package of concentrate may be added to the container, and the remainder once again filled with water.

It has been found useful to package certain cleaning concentrates in water-soluble packaging, particularly in single use, pre-measured amounts. Forming the cleaning solution is made easier by the use of water-soluble packaging containing the concentrate because the user may simply add the water-soluble package to a container and then add the correct amount of water to form the desired cleaning solution. As the water-soluble packaging dissolves, the cleaner is released and forms a cleaning solution having the proper concentration of cleaner.

EP 0 291 198 relates to a PVA film modified with anionic comonomers for use as a water-soluble seal or pouch for alkaline or borate-containing cleaning compositions. The film comprises copolymers of 90-100% hydrolyzed vinyl alcohol with a nonhydrolyzable anionic comonomer, and has molecular weights characterized by a viscosity range of 4-35 cPs.

US 4 206 101 relates to films which are rapidly and completely soluble in cold water, and which are suitable for use as packaging film in automatic packaging equipment. The films can be prepared by conventional melt extrusion processes when prepared from a composition consisting essentially of 5-20 parts by weight of a polyethylene glycol (having an average molecular weight in the range between 325 and 550) in 100 parts by weight of a partially hydrolyzed low molecular weight polyvinyl alcohol.

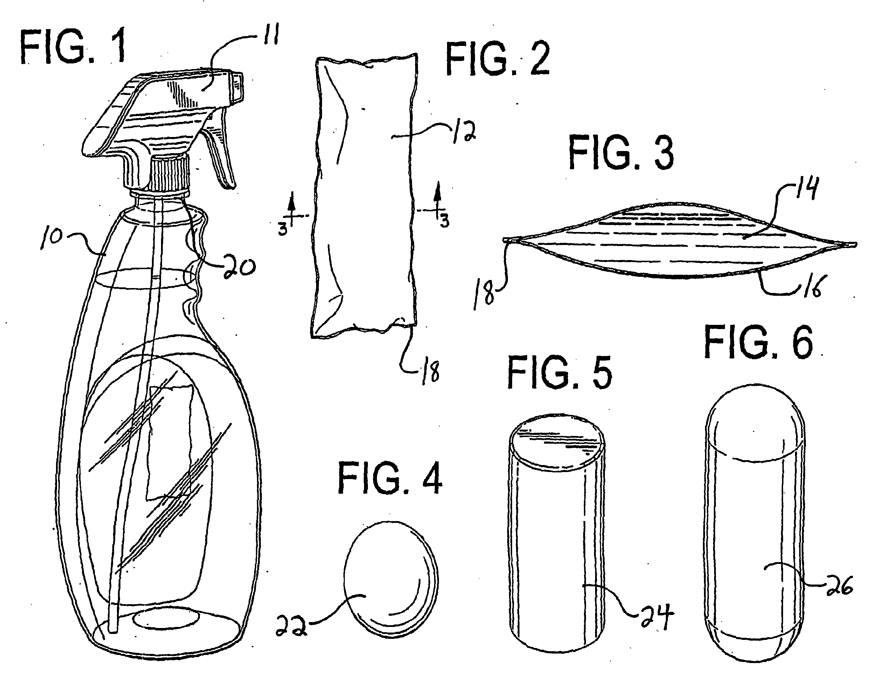

One problem with packaging hard surface cleaning concentrates in water-soluble packaging is that the dissolved packaging may create a haze in an otherwise clear or transparent cleaning solution. It is often desirable that the cleaning solution be dispensed from a clear container 10, which may include a trigger spray mechanism 11 as shown in FIG. 1. Haziness or turbidity in the cleaning solution from the dissolved packaging may result in residue deposited on the surface that is cleaned. Even if no appreciable residue is deposited on the surface during cleaning, when a hazy cleaning solution is placed in a clear container an impression may be created in the mind of the consumer that there will be an undesirable residue left on the cleaned surface.

### Summary

The present invention provides a hard surface cleaning concentrate article, comprising a single-use water-soluble film package containing a hard surface cleaning concentrate. The water-soluble film comprises a polyvinyl alcohol, present in a range of from 70 % to 95 % by weight; and an additive, present in a range of from 5 % to 30 % by weight, said additive comprising a plasticiser, which is not a haze-creating material, and a surfactant. The film comprises less than 1 % by weight of haze-creating agents, wherein the haze-creating agents include anti-block agents, release agents, lubricants, detackifying agents, fillers, extenders and other haze-creating agents. The hard surface cleaning concentrate provides a transparent solution when added to water, the film provides a transparent solution when added to water, and the single-use water soluble film package provides a transparent solution when added to water. A solution which includes 0.5g of the film dissolved in a 780ml hard surface cleaning solution made from 12ml of the hard surface cleaning concentrate in water has a turbidity of less than 3.0 nephelometric turbidity units (NTU).

According to one embodiment, a solution which includes 0.5 g of the film dissolved in 780 ml of a cleaning solution including approximately 1% to 2% by volume of a cleaning concentrate has a turbidity in the range of from 0 NTU and up to 3.0 NTU. The solution without the film dissolved in it has a turbidity of 0.4 NTU.

According to another embodiment, a solution which includes 0.5 g of film dissolved in 780 ml of a cleaning solution containing approximately 1 % to 2 % by volume of a cleaning concentrate has a turbidity in the range of from 0 NTU and up to 3.0 NTU. The solution without the film dissolved in it has a turbidity of 0.4 NTU.

### Brief Description of the Drawings

FIG. 1 is a perspective view of a container having water and an dissolved cleaning concentrate package therein;
FIG. 2 is a perspective view of a cleaning concentrate package according to one embodiment;
FIG. 3 is a cross-sectional view of the cleaning concentrate package of FIG. 2 along line 3;
FIG. 4 is a perspective view of a cleaning concentrate package according to another embodiment;
FIG. 5 is a perspective view of a cleaning concentrate package according to another embodiment; and,
FIG. 6 is a perspective view of a cleaning concentrate package according to another embodiment.

### Detailed Description

While the invention is susceptible of embodiment in may different forms, there is shown in the drawings and will herein be described in detail preferred embodiments of the invention. It is to be understood that the present disclosure is to be considered as an exemplification of the principles of the invention. This exemplification is not intended to limit the broad aspect of the invention to the illustrated and described embodiments.

Hard surface cleaners are commonly used to clean minors, windows, counters, tables, appliances, and many other items. The hard surface cleaner is provided in a concentrated form for combining with water to form a cleaning solution. The hard surface cleaners contemplated for use in conjunction with the present invention include any concentrated cleaning agents that form a solution with water in which the solution is substantially clear or transparent. The solution may be colored.

The hard surface cleaner may be any condensed phase (*e.g*., solid, gelatinous, emulsion, and liquid), but preferably is a liquid. Generally, cleaners can include surfactants, solvents, chelating agents, detergents, emulsifiers, dyes, and fragrances, among other things. The cleaner is usually concentrated such that it may be combined with a volume of water to form a cleaning solution that maybe applied directly to a surface and then wiped from the hard surface, preferably leaving the surface clean and streak free. The cleaning solution preferably is applied by spraying it directly onto the surface to be cleaned using a container 10 including a trigger spray mechanism 11. While the cleaning concentrate preferably is concentrated to a sufficient degree that it may be combined with water to form a relatively dilute cleaning solution suitable for cleaning, it may initially include water as a component.

FIG. 2 shows one embodiment of a package 12 for containing a cleaning concentrate.
FIG. 3 shows a cross-sectional view of the package 12. The cleaning concentrate 14 is generally sealed in the package 12. The package 12 preferably is formed from two pieces (e.g., webs or sheets) of water-soluble film 16 which preferably are bonded (e.g., to one another) along a periphery 18 by heat sealing, solvent bonding, ultrasonic or dielectric welding, or radio frequency sealing. The packages can be configured in various shapes and with various sealing configurations, none of which are particularly preferred. In other embodiments, a package may be formed from a continuous web of water-soluble film that is folded and sealed to itself along a periphery of the folded section. There are a variety of packaging machines which can form the filled packages from either one or two film webs. The form of the package 12 is preferably elongated such that it will fit through a neck 20 of the spray bottle as shown in FIG. 1, or other container, advantageously one having a narrowed opening.

Numerous alternative designs and shapes for a cleaner containing package exist, and may be used with the same beneficial results. Some of these are shown in FIGS. 4-6, and include a spherical package 22, a cylindrical package 24, and a capsule shaped package 26. The package may comprise a plurality of layers of film materials, the same or different from each other, and preferably is a single-layer film.

One preferred cleaning system includes a kit including a cleaning concentrate in any of the various water-soluble packages described above, and a container having a volume such that the package containing the cleaning concentrate may be placed in the container, the remainder of the container adapted to be filled with water to provide a substantially haze-free cleaning solution having the desired concentration of cleaning agent. The preferred container is a trigger spray bottle as shown in FIG.1. The preferred container is reusable and includes a detachable trigger spray mechanism 11, which caps an opening of the container 10. Once all the cleaning solution has been used, another cleaning concentrate package preferably is added to the container, and the remainder filled with water to again form a properly concentrated cleaning solution. A plurality of water-soluble packages containing the cleaning concentrate can be packaged with the container to allow the container to be refilled numerous times.

The water-soluble film used in the present invention generally creates a substantially haze-free solution with water. The film generally includes three major components; a water-soluble polymer component, a plasticizer component, and a surfactant component. In one embodiment, the water-soluble film will consist of only these three components, and will be substantially free of any other additives. In another embodiment, the water-soluble film will consist essentially of these three components, and will be substantially free of any other additives which materially affect the basic and novel properties of the film and/or package. Many additives typically present in a water-soluble film cause turbidity when the film is placed with water. Some of the types of additives which preferably are not present in the film include anti-block agents, which prevent adhesion of the surfaces of the film to one another, release agents, lubricants, detackifying agents, fillers, and extenders.

Numerous specific materials generally found in water-soluble films have been shown to contribute to the turbidity of a solution of water and the film, and are preferably excluded from a film used in the present invention. These materials may include starches, modified starches, cross-linked polyvinyl pyrrolidone, water-insoluble polymers including polyolefins and polyvinyl acetate among others, cross-linked cellulose ethers, microcrystalline cellulose, chitin, natural and synthetic waxes, certain fatty materials including certain fatty amines, fatty amides, fatty esters including sorbitan fatty acid esters, fatty acids including stearic acid, fatty alcohols, calcium stearate, magnesium stearate; metallic oxides including zinc and aluminum oxides, ground pumice, ground slag, silica, diatomaceous earth, silicates and silicate minerals including talc, mica, and various clays such as kaolin and zeolites; calcium carbonate, magnesium carbonate, calcium sulfate and barium sulfate. These and other additives which contribute to haze when placed in solution with water are generally referred to as haze-creating materials herein.

Water-soluble films used in the present invention may include varying amounts of haze-creating materials, a number of which are discussed above. Generally, the type of haze-creating material affects the degree of haze creation for a given amount of material. Thus, the amount of haze-creating material in a water-soluble film used in the present invention will be less than 1% by weight. More preferably, the amount of haze-creating material will be less than 0.2% by weight.

The three components preferably present in a film used in the present invention, a water-soluble polymer, a plasticizer, and a surfactant, generally dissolve in water to form a substantially haze-free solution. The water-soluble polymer component is a polyvinyl alcohol (PVOH) resin. The polyvinyl alcohols useful in the present invention may be partially hydrolyzed, and when the polymer is formed from a single monomer, preferably has a degree of hydrolysis in the range of from 74% to 90 % including all ranges and combination of ranges which are a subset therein.

The PVOH resin used may also be of the copolymer type. Copolymer type PVOH resins may include resins having a degree of hydrolysis of up to 100 %. A vinyl alcohol polymer with carboxylate functionality having degrees of hydrolysis up to 100 % is also an example of a suitable water-soluble polymer.

The PVOH resins used in the film used in the present invention may be of any degree of polymerization. The preferred molecular weights for use in a film used in the present invention include low to medium molecular weight PVOH resins. Preferably, the degree of polymerization is such that a 4 wt. % aqueous solution at 20°C has a viscosity in the range of from 3 MPa to 30 MPa including all ranges and combination of ranges which are a subset therein.

The PVOH resin selected is present in a range of from 70 % to 95% by weight including all ranges and combination of ranges which are a subset therein, more preferably in the range of from 80 % to 88 % by weight.

The plasticizer used in a film used in the present invention is not a haze-creating material. Preferred plasticizers include, but are not limited to glycerin, diglycerin, sorbitol, ethylene glycol, diethylene glycol, triethylene glycol, propylene glycol, polyethylene glycols up to 400 molecular weight (MW), neopentyl glycol, trimethylolpropane, polyether polyols, ethanolamines, and combinations containing at least one of the listed plasticizers.

The selected plasticizer preferably is present in an amount in the range of from 5 % to 30 % by weight including all ranges and combination of ranges which are a subset therein, for example from 12% to 20% by weight.

The third component present is a surfactant. Many different surfactants are suitable for use in a film used in the present invention. The surfactant of choice preferably includes a hydrophile-lipophile balance (HLB) value of approximately 10 or higher, more preferably 13 or higher. Especially preferred surfactants are those that have some functionality as release agents, for example combinations of quaternary ammonium compounds and amine oxides. The preferred amount of surfactant in the films preferably is in a range of from 0.01 % to 1.0 % by weight including all ranges and combination of ranges which are a subset therein, for example in a range of from 0.1 % to 0.6 % by weight.

In one embodiment, a solution which includes 0.5 g of the film dissolved in 780 ml of a cleaning solution has a turbidity less than 3.0 NTU. In another embodiment, a solution which includes 0.5 g of the film dissolved in 768 ml of a cleaning solution has a turbidity less than 3.0 NTU.

The following examples demonstrate formulations of a film according to the disclosure, and are not intended to limit the scope of the invention.

As can be seen from the examples below, it is contemplated that a film as described herein may have at least 79.6 wt.%, at least 80 wt. %, at least 83 wt. %, at least 83.5 wt %, or at least 85.7 wt.% of a water-soluble polymer which is polyvinyl alcohol. It is also contemplated that a film according to the disclosure herein can have at least 14 wt. %, at least 16.8 wt. %, at least 19.75 wt. %, at least 20 wt.%, or at least 21.8 wt. % of a plasticizer, such as glycerin, triethylene glycol, propylene glycol, and polyethylene glycol 200. It is also contemplated that a film according to the disclosure herein can have at least 0.2 wt.%, at least 0.25 wt. %, at least 0.3 wt. %, at least 0.4 wt. %, or at least 0.5 wt.%, of a surfactant, such as octylphenol ethoxylate, lanryl/myristyl alcohol ethoxylate, n-alkyltrimethylammonium chloride, and myristamine oxide.

### Example 1:

| | |
|---|---|
| Polyvinyl Alcohol | 83.0 % |
| Glycerin | 16.8% |
| Octylphenol ethoxylate | 0.2% |

### Example 2:

| | |
|---|---|
| Polyvinyl Alcohol 1 | 40.00% |
| Polyvinyl Alcohol 2 | 40.00% |
| Triethylene Glycol | 19.75% |
| Lauryl/myristyl alcohol | |
| ethoxylate | 0.25% |

### Example 3:

| | |
|---|---|
| Polyvinyl Alcohol | 83.5% |
| Glycerin | 16.8% |
| Propylene Glycol | 5.0% |
| Lauryl/myristyl alcohol | |
| ethoxylate | 0.2% |
| n-Alkyltrimethylammonium | |
| chloride | 0.3% |

### Example 4:

| | |
|---|---|
| Polyvinyl Alcohol | 85.7% |
| Glycerin | 14.0% |
| n-Alkyltrimethylammonium | |
| chloride | 0.14% |
| Myristamine oxide | 0.16 % |

### Example 5:

| | |
|---|---|
| Polyvinyl Alcohol 1 | 60.0 % |
| Polyvinyl Alcohol 2 | 19.6 % |
| Triethylene Glycol | 12.0 % |
| Polyethylene Glycol 200 | 8.0 % |
| n-Alkyltrimethylammonium | |
| chloride | 0.18% |
| Myristamine oxide | 0.22 % |

The example film compositions provided above form substantially haze-free solutions with water. In addition, the films are capable of forming a solution with water and a cleaning agent that is sufficiently haze-free to clean a hard surface without leaving a residue on the cleaned surface. In addition, such a solution is sufficiently clear such that a consumer will not observe haziness in the solution when it is placed in a clear container.

A solution of dissolved water-soluble film in water should meet a minimum degree of clarity. Tests were performed to measure the results of using a water-soluble film according to the disclosure versus using other commercially available water-soluble films in lowering turbidity when the dissolved films are present in a cleaning solution. Example formulations two (2) and three (3), the formulations of which are listed above, were tested against various commercially available PVOH films for turbidity in solution with a cleaning solution. The results shown in the table below clearly demonstrate the benefits of the present invention over the prior art films in lowering turbidity in a solution of dissolved water-soluble film and cleaning concentrate in water.

| **FILM** | **TURBIDITY (NTU)** |
|---|---|
| Example 2 Film | 0.87 |
| Example 3 Film | 0.96 |
| Kuraray¹ HH Film | 7.13 |
| Aicello² PT Film | 3.32 |
| Aicello² KB Film | 3.91 |
| Control (Cleaning solution only) | 0.37 |

| | |
|---|---|
| ¹The Kuraray Co. Ltd., Osaka, Japan. ²The Aicello Chemical Co. Ltd., Aichi, Japan. | |

The test method used to generate the results in the table above first included the preparation of a laboratory-prepared, all-purpose cleaner concentrate. The cleaner concentrate formulation included:

| **COMPONENT** | **% BY WEIGHT** |
|---|---|
| Ethylene glycol monobutyl ether | 28 |
| 2:1 diethanolamine-coconut fatty acid condensate | 17 |
| Sodium lauryl sulfate | 26 |
| Tetrasodium EDTA | 23 |
| Water | 6 |

Packages were then constructed of each of the tested water-soluble films, and each was filled with 12 ml of the cleaning concentrate. The film thickness for each of the water-soluble films used in the packages was approximately 73 µm ± 3 microns. The package dimensions were approximately 13 cm by 2 cm, and the approximate mass of the total film in each of the packages was 0.5 g.

Each of the packages was then dissolved in 768 ml of tap water to make solutions having 1.5 % by volume of the cleaning concentrate. The cleaning concentrate and dissolved films were allowed to uniformly disperse in the solutions. A 10 ml sample was then removed from each solution for turbidity measurement testing. The device used to measure turbidity for each of the 10 ml samples was a Hach Model 2100AN Laboratory Turbidimeter, calibrated with NIST-traceable standards.

The turbidity measurements shown above demonstrate films according to the disclosure allow for the formation of cleaning solutions which are substantially haze-free and have relatively low turbidity measurements. Generally, a solution of water-soluble film according to the disclosure, a hard surface cleaner, and water will provide a turbidity measurement of less than 3.0 NTU. More preferably the turbidity measurement of such a solution is less than 1.0 NTU. The turbidity measurement is, in part, dependent on the cleaning concentrate used to form the cleaning solution, and better clarity may be achieved by selecting a cleaning concentrate having a low turbidity measurement in solution.

It can be appreciated that the testing conducted shows the solutions obtained using the Kuraray and Aicello films were, respectively, approximately nineteen times and ten times more turbid than the control, while the solutions obtained using the films of Examples 2 and 3 were only approximately two and one half times more turbid than the controL The reduced turbidity resulted in a cleaning solution having dissolved water-soluble film and cleaning concentrate in a water solution that is substantially haze-free. In a preferred embodiment, the clarity of cleaning solutions formed from a dissolved package containing a cleaning concentrate in accordance with the disclosure provides a solution which appears haze-free to the naked eye.

Further turbidity testing of the films of Examples two and three was conducted wherein the films were dissolved only in water without cleaning solution. Solutions were prepared for each of the tested films. The solutions included approximately 0.5g of film dissolved in 768ml of tap water making a 0.0065 % by weight solution of dissolved film. 10ml samples of the solutions were tested according to the procedure described above. The turbidity measurement for the solution of the film of Example two in water was approximately 0.57 NTU. The turbidity measurement for the solution of the film of Example three in water was also approximately 0.57 NTU. Both of the solutions appeared clear and haze-free to the naked eye.

While specific embodiments have been illustrated and described, numerous modifications immediately come to mind without significantly departing from the spirit of the invention.

## Claims

1. A hard surface cleaning concentrate article, comprising: a single-use water-soluble film package containing a hard surface cleaning concentrate, the film comprising a polyvinyl alcohol present in a range of 70% to 95% by weight, an additive present in a range of 5% to 30% by weight, said additive comprising a plasticizer and a surfactant, and less than 1 % by weight of haze-creating agents wherein the haze-creating agents include anti-block agents, release agents, lubricants, detackifying agents, fillers, extenders and other haze-creating agents, wherein the hard surface cleaning concentrate provides a transparent cleaning solution when added to water, wherein the film provides a transparent solution when added to water, and wherein the single-use water soluble film package provides a transparent solution when added to water, and, wherein a solution which includes 0.5 g of the film dissolved in a 780ml hard surface cleaning solution made from 12 ml of the hard surface cleaning concentrate in water has a turbidity of less than 3.0 NTU, and wherein the plasticizer is not a haze-creating material.

2. An article according to claim 1 wherein the hard surface cleaning concentrate is a liquid.

3. An article according to Claim 1, wherein the turbidity of the film containing solution is less than 1.0 NTU.

4. An article according to any one of the preceding claims, wherein the polyvinyl alcohol is a copolymer.

5. An article according to Claim 1, wherein the polyvinyl alcohol has a degree of hydrolysis in a range of 74% to 90%.

6. An article according to any one of the preceding claims, wherein the film is substantially free of haze-creating materials.

7. An article according to Claim 1, wherein the amount of haze-creating materials is less than 0.2% by weight.

8. An article according to any one of the preceding claims, wherein the polyvinyl alcohol has a degree of polymerization such that a 4% aqueous solution at 20°C has a viscosity in arrange of from 3 MPa to 30 MPa.

9. An article according to any one of the preceding claims, wherein said surfactant is present in a range of 0.01% to 1.0% by weight.

10. An article according to Claim 9, wherein the surfactant is present in a range of 0.1% to 0.6% by weight.

11. An article according to any one of the preceding claims, wherein said plasticizer is selected from the group consisting of glycerine, diglycerin, sorbitol, ethylene glycol, diethylene glycol, triethylene glycol, propylene glycol, polyethylene glycols up to 400MW, neopentyl glycol, trimethylotpropane, polyether polyols, ethanolamines, and combinations containing at least one member of said group.

12. An article according to any one of the preceding claims, wherein said plasticizer is present in a range of from 5% to 30% by weight.

13. An article according to claim 12, wherein said plasticizer is present in an amount in a range of from 12% to 20% by weight.

14. A hard surface cleaning kit, comprising the package of Claim 1 and a container.

15. A kit according to Claim 14, wherein the package is disposed in the container.

16. A kit according to Claim 14 or 15, wherein the container has a constricted opening and the packet is sized to fit in the constricted opening.

17. A kit according to any one of Claims 14 to 16, wherein the packet and container are sized with respect to each other such that dissolution of the packet in a volume of water equal to the container volume provides a hard surface cleaning solution having a turbidity less than 3.0 NTU.

18. A kit according to Claim 17, wherein the packet and container are sized with respect to each other such that dissolution of the packet in a volume of water equal to the container volume provides a hard surface cleaning solution having a turbidity less than 1.0 NTU.

19. A kit according to any one of Claims 14 to 18, wherein the container is transparent.

20. A kit according to any one of Claims 14 to 19 further comprising a trigger spray mechanism, capping an opening of the container.

## Patentansprüche

1. Reinigungskonzentratartikel für harte Oberflächen, umfassend eine ein Reinigungskonzentrat für harte Oberflächen enthaltende wasserlösliche Filmverpackung für den Einmalgebrauch, wobei der Film einen in einem Bereich von 70 bis 95 Gew.-% vorliegenden Polyvinylalkohol, ein in einem Bereich von 5 bis 30 Gew.-% vorliegendes Additiv enthält, wobei das Additiv einen Weichmacher und ein Tensid sowie weniger als 1 Gew.-% von eine Trübung verursachenden Mitteln enthält, wobei die eine Trübung verursachenden Mittel Antiblockmittel, Trennmittel, Schmiermittel, Antiklebemittel, Füllmittel, Streckmittel sowie weitere eine Trübung verursachende Mittel enthalten, wobei das Reinigungskonzentrat für harte Oberflächen bei der Zugabe zu Wasser eine transparente Reinigungslösung bereitstellt, wobei der Film bei der Zugabe zu Wasser eine transparente Lösung bereitstellt und wobei die wasserlösliche Filmverpackung für den Einmalgebrauch bei Zugabe zu Wasser eine transparente Lösung bereitstellt, und wobei eine Lösung, die 0,5 g des in 780 ml einer Reinigungslösung für harte Oberflächen, hergestellt aus 12 ml des Reinigungskonzentrats für harte Oberflächen in Wasser, aufgelösten Films enthält, eine Trübung von weniger als 3,0 NTU aufweist, und wobei der Weichmacher kein eine Trübung verursachender Stoff ist.

2. Artikel nach Anspruch 1, wobei das Reinigungskonzentrat für harte Oberflächen eine Flüssigkeit ist.

3. Artikel nach Anspruch 1, wobei die Trübung der den Film enthaltenden Lösung weniger als 1,0 NTU beträgt.

4. Artikel nach einem der vorherigen Ansprüche, wobei der Polyvinylalkohol ein Copolymer ist.

5. Artikel nach Anspruch 1, wobei der Polyvinylalkohol einen Hydrolysegrad in einem Bereich von 74% bis 90% aufweist.

6. Artikel nach einem der vorherigen Ansprüche, wobei der Film im Wesentlichen frei von eine Trübung verursachenden Stoffen ist.

7. Artikel nach Anspruch 1, wobei die Menge der eine Trübung verursachenden Stoffe weniger als 0,2 Gew.-% beträgt.

8. Artikel nach einem der vorherigen Ansprüche, wobei der Polyvinylalkohol einen Pollymerisationsgrad derart aufweist, dass eine 4%-ige wässerige Lösung bei 20°C eine Viskosität in einem Bereich von 3 MPa bis 30 MPa aufweist.

9. Artikel nach einem der vorherigen Ansprüche, wobei das Tensid in einem Bereich von 0,01 bis 1,0 Gew.-% vorliegt.

10. Artikel nach Anspruch 9, wobei das Tensid in einem Bereich von 0,1 bis 0,6 Gew.-% vorliegt.

11. Artikel nach einem der vorherigen Ansprüche, wobei der Weichmacher ausgewählt ist aus der Gruppe bestehend aus Glyzerin, Diglyzerin, Sorbitol, Ethylenglykol, Diethylenglykol, Triethylenglykol, Propylenglykol, Polyethylenglykole bis zu 400 MW, Neopentylglykol, Trimethylolpropan, Polyetherpolyole, Ethanolamine sowie Kombinationen enthaltend mindestens ein Element dieser Gruppe.

12. Artikel nach einem der vorherigen Ansprüche, wobei der Weichmacher in einem Bereich von 5 bis 30 Gew.-% vorliegt.

13. Artikel nach Anspruch 12, wobei der Weichmacher in einem Bereich von 12 bis 20 Gew.-% vorliegt.

14. Reinigungskit für harte Oberflächen, umfassend die Verpackung nach Anspruch 1 sowie einen Behälter.

15. Kit nach Anspruch 94, wobei die Verpackung in dem Behälter angeordnet ist.

16. Kit nach Anspruch 14 oder 15, wobei der Behälter eine verengte Öffnung aufweist und das Paket derart bemessen ist, dass es in die verengte Öffnung passt.

17. Kit nach einem der Ansprüche 14 bis 16, wobei das Paket und der Behälter in Bezug aufeinander derart bemessen sind, dass die Auflösung des Pakets in einem dem Behältervolumen entsprechenden Wasservolumen eine Reinigungslösung für harte Oberflächen mit einer Trübung von weniger als 3,0 NTU bereitstellt.

18. Kit nach Anspruch 17, wobei das Paket und der Behälter in Bezug aufeinander derart bemessen sind, dass die Auflösung des Pakets in einem dem Behältervolumen entsprechenden Wasservolumen eine Reinigungslösung für harte Oberflächen mit einer Trübung von weniger als 1,0 NTU bereitstellt.

19. Kit nach einem der Ansprüche 14 bis 18, wobei der Behälter transparent ist.

20. Kit nach einem der Ansprüche 14 bis 19, weiterhin umfassend einen eine Öffnung des Behälters bedeckenden Triggersprühmechanismus.

## Revendications

1. Article à concentrer de nettoyage de surface dure, comprenant : un emballage de type film hydrosoluble à usage unique contenant un concentré de nettoyage de surface dure, le film comprenant un poly(alcool vinylique) présent dans une plage de 70 % à 95 % en poids, un additif présent dans une plage de 5 % à 30 % en poids, ledit additif comprenant un plastifiant et un tensioactif, et moins de 1 % en poids d'agents créant un voile où les agents créant un voile incluent les agents antiadhérence, les agents de séparation, les lubrifiants, les agents détackifiants, les charges, les extendeurs et d'autres agents créant un voile, où le concentré de nettoyage de surface dure produit une solution de nettoyage transparente quand il est ajouté à de l'eau, où le film produit une solution transparente quand il est ajouté à de l'eau, et où l'emballage de type film hydrosoluble à usage unique produit une solution transparente quand il est ajouté à de l'eau, et où une solution qui inclut 0,5 g du film dissous dans 780 ml de solution de nettoyage de surface dure produite à partir de 12 ml du concentré de nettoyage de surface dure dans l'eau a une turbidité inférieure à 3,0 NTU, et où le plastifiant n'est pas un matériau créateur de voile.

2. Article selon la revendication 1 où le concentré de nettoyage de surface dure est un liquide.

3. Article selon la revendication 1 où la turbidité de la solution contenant un film est inférieure à 1,0 NTU.

4. Article selon l'une quelconque des revendications précédentes où le poly(alcool vinylique) est un copolymère.

5. Article selon la revendication 1 où le poly(alcool vinylique) a un degré d'hydrolyse dans une plage de 74 % à 90 %.

6. Article selon l'une quelconque des revendications précédentes où le film est sensiblement dépourvu de matériaux créant un voile.

7. Article selon la revendication 1 où la quantité de matériaux créant un voile est inférieure à 0,2 % en poids.

8. Article selon l'une quelconque des revendications précédentes où le poly(alcool vinylique) a un degré de polymérisation tel qu'une solution aqueuse à 4 % à 20°C a une viscosité dans une plage de 3 MPa à 30 MPa.

9. Article selon l'une quelconque des revendications précédentes où ledit tensioactif est présent dans une plage de 0,01 % à 1,0 % en poids.

10. Article selon la revendication 9 où le tensioactif est présent dans une plage de 0,1 % à 0,6 % en poids.

11. Article selon l'une quelconque des revendications précédentes où ledit plastifiant est choisi dans le groupe consistant en la glycérine, la diglycérine, le sorbitol, l'éthylèneglycol, le diéthylèneglycol, le triéthylèneglycol, le propylèneglycol, les polyéthylèneglycols jusqu'à 400 MM, le néopentylglycol, le triméthylolpropane, les polyétherpolyols, les éthanolamines et les combinaisons contenant au moins un membre dudit groupe.

12. Article selon l'une quelconque des revendications précédentes où ledit plastifiant est présent dans une plage de 5 % à 30 % en poids.

13. Article selon la revendication 12 où ledit plastifiant est présent en une quantité dans une plage de 12 % à 20 % en poids.

14. Kit de nettoyage de surface dure comprenant l'emballage selon la revendication 1 et un récipient.

15. Kit selon la revendication 14 où l'emballage est disposé dans le récipient.

16. Kit selon la revendication 14 ou 15 où le récipient a une ouverture resserrée et le paquet est dimensionné pour s'adapter dans l'ouverture resserrée.

17. Kit selon l'une quelconque des revendications 14 à 16 où le paquet et le récipient sont dimensionnés l'un par rapport à l'autre de telle manière que la dissolution du paquet dans un volume d'eau égal au volume du récipient produit une solution de nettoyage de surface dure ayant une turbidité inférieure à 3,0 NTU.

18. Kit selon la revendication 17 où le paquet et le récipient sont dimensionnés l'un par rapport à l'autre de telle manière que la dissolution du paquet dans un volume d'eau égal au volume du récipient produit une solution de nettoyage de surface dure ayant une turbidité inférieure à 1,0 NTU.

19. Kit selon l'une quelconque des revendications 14 à 18 où le récipient est transparent.

20. Kit selon l'une quelconque des revendications 14 à 19 comprenant en outre un mécanisme de pulvérisation à déclencheur coiffant une ouverture du récipient.
